**Europäisches Patentamt**

**European Patent Office**

**Office européen des brevets**

(19)

(11) Veröffentlichungsnummer: **0 167 072**
**A2**

(12) **EUROPÄISCHE PATENTANMELDUNG**

(21) Anmeldenummer: **85107695.0**

(22) Anmeldetag: **21.06.85**

(51) Int. Cl.⁴: **G 06 K 17/00**
**G 06 K 7/10**

(30) Priorität: 30.06.84 DE 3424162

(43) Veröffentlichungstag der Anmeldung:
**08.01.86 Patentblatt 86/2**

(84) Benannte Vertragsstaaten:
**AT CH DE FR GB IT LI**

(71) Anmelder: **Baus, Heinz Georg**
**Wartbodenstrasse 35**
**CH-3626 Hünibach-Thun(CH)**

(72) Erfinder: **Baus, Heinz Georg**
**Wartbodenstrasse 35**
**CH-3626 Hünibach-Thun(CH)**

(74) Vertreter: **Klose, Hans, Dipl.-Phys. et al,**
**Kurfürstenstrasse 32**
**D-6700 Ludwigshafen(DE)**

(54) **Vorrichtung zur Speicherung und Ausgabe von Informationsmengen.**

(57) Eine Vorrichtung zur Speicherung und Ausgabe von Informationsmengen enthält wenigstens ein Lesegerät (56) für Codierungen (54) die an Waren (52) oder sonstigen Objekten angeordnet bzw. diesen zugeordnet sind. Es ist ferner eine Speichereinheit (30) für Informationsmengen und ein entsprechendes Ausgabegerät (32) vorhanden. In Warenhäusern oder dergleichen sollen den Benutzern vor allem produktspezifische Informationsmengen direkt und zuverlässig dargeboten werden können. Es wird vorgeschlagen, daß die Datenverarbeitungseinheit (24) eine programmierbare Codiereinheit (64) aufweist, mittels welcher einerseits Adressignale für die Informationsmengen und andererseits die jeweils zugeordneten Codierungen eingespeichert sind. Mittels des Lesegerätes (56) werden über die Codiereinheit (64) aus der Speichereinheit (30) die gewünschten Informationsmengen abgerufen und auf dem Ausgabegerät (32) dargestellt.

EP 0 167 072 A2

./...

FIG.1

**Patentanwalt Dipl.-Phys. HANS KLOSE**
Zugelassener Vertreter vor dem Europäischen Patentamt
_ 1 _

6700 Ludwigshafen
Kurfürstenstraße 32

**0167072**

Anmelder: Heinz Georg Baus, Wartbodenstr. 35
CH-3626 Hünibach/Thun

Vorrichtung zur Speicherung und Ausgabe von Informationsmengen

Die Erfindung betrifft eine Vorrichtung zur Speicherung und
Ausgabe von Informationsmengen mit einem Lesegerät für Codierungen, die auf oder in der Nähe von Waren oder sonstigen
Objekten angeordnet oder diesen zugeordnet sind, mit einer
Datenverarbeitungseinheit und mit einer Speichereinheit für
die Informationsmengen, welche entsprechend der jeweils mit
dem Lesegerät eingelesenen Codierung über ein Adressignal
abrufbar und mittels eines Ausgabegerätes darstellbar sind.

In Warenhäusern, Supermärkten usw. wird eine Vielzahl von
Produkten den Kunden in geeigneten Trägeranordnungen, wie
Regalen, Gestellen usw. dargeboten, wobei seitens des Kunden
oftmals ein großes Informationsbedürfnis über Verwendungszweck, Einsatzmöglichkeit, Material usw. besteht. Die auf den
Warenverpackungen angebrachten Informationen sind oft unvollständig und vermitteln dem Kunden nicht sämtliche gewünschten
Informationen. Ferner werden heute im Hinblick auf Umweltbelastungen Verpackungen immer kleiner oder entfallen gänzlich,
so daß insoweit auch die Möglichkeit einer Informationsübermittlung entfällt. Ferner fehlt besonders bei kleinen Produkten, wie z.B. bei Schrauben, die Möglichkeit einer direkter

**Patentanwalt Dipl.-Phys. HANS KLOSE**
Zugelassener Vertreter vor dem Europäischen Patentamt

**6700 Ludwigshafen**
Kurfürstenstraße 32

- 2 -

0167072

Informationsübermittlung. Daher sind bisher geeignete und über die entsprechenden Fachkenntnisse verfügende Verkaufsberater erforderlich, wodurch ein hoher Personal- und Kostenaufwand entsteht. Ferner besteht auf Ausstellungen, in Museen usw. oftmals ein erhebliches Informationsbedürfnis über die ausgestellten Objekte oder sonstigen Gegenstände.

In der DE-OS 31 09 599 ist eine Verkaufseinrichtung für Waren mit einer Strichcode-Kennzeichnung beschrieben. Die Verkaufseinrichtung enthält Strichcode-Lesegeräte zur Abtastung der auf den Waren oder den Verpackungen angeordneten Strichcodierungen, um die vom Kunden gekauften Waren an der Kasse zu identifizieren und den Kaufvorgang preisrechnerisch abzuschließen. Ferner werden auch frei portionierbare Frischwaren, beispielsweise Fleisch oder Gemüse, mittels Strichcodierungen versehen, wobei vorgedruckte Etiketten mit fortlaufend nummerierten Codierungen verwendet werden. Hierzu muß ein Verkäufer durch Betätigen einer Tastatur die Zuordnung von gespeicherten Informationen zu der jeweiligen Ware vornehmen. Fehlbedienungen oder unerlaubte Manipulationen sind leicht möglich. Jede Identifizierung muß hinsichtlich Warenart, Warenmenge bzw. -größe des Produktes eindeutig sein. Mittels einer Datenverarbeitungseinheit werden die vom Lesegerät erfaßten Codierungen verarbeitet und der gespeicherte Produktpreis und ggfs. das Gewicht oder weitere Angaben abgerufen, von einem Registriergerät angezeigt und auf einer dem Kunden zu übergebenden Quittung abgedruckt.

Ein Lesegerät zum Erfassen von Strichcodierungen ist in der DE-PS 28 38 243 beschrieben. Das Lesegerät enthält eine Lichtquelle und ein optisches System, um das von der Lichtquelle erzeugte Licht abzutasten, auf die zu erfassende Strichcodierung zu richten und das reflektierte Licht auf einen Wandler zu richten. Mittels einer geeigneten Auswerteschaltung erfolgt die Umwandlung in elektrische Signale. Mit dem bekannten als Handabtaster ausgebildeten Lesegerät sollen die Strichcodierungen auch dann erfaßt werden können, wenn es nicht genau auf die Strichcodierungen aufgesetzt ist. Derartige oder in vergleichbarer Weise funktionierende Lesegeräte werden für die

0167072

vorgeschlagene Vorrichtung als bekannt vorausgesetzt und sollen auch nicht weitergebildet werden.

Ferner ist in der DE-OS 27 44 612 ein tragbares optisches Zeichenerkennungssystem beschrieben, das eine Anzeigevorrichtung sowie ein von dem Benutzer in die Hand zu nehmendes Lesegerät enthält. Mittels der Anzeigevorrichtung können ausschließlich die mit dem Lesegerät erfaßten Informationen zwecks Kontrolle angezeigt werden. Es ist ein Kassettenrekorder zur Speicherung der mit dem Lesegerät erfaßten Codierungen beschrieben. Das bekannte Zeichenerkennungssystem wird vom Personal eines Kaufhauses oder dergleichen eingesetzt, um eine Bestandsaufnahme über die Anzahl und Art der verfügbaren Waren, insbesondere zum Zweck der Inventur, zu ermöglichen. Mit dem Kassettenrekorder wird auch die Anzahl der erfaßten Waren oder dergleichen gespeichert. Das bekannte System ist zur Speicherung und Ausgabe von großen Informationsmengen, insbesondere von bildlichen Darstellungen für Werbespots oder ähnlichem, nicht geeignet.

Schließlich ist in der US-PS 40 70 649 ein Eingabe- und Ausgabeapparat sowie eine entsprechende Methode beschrieben um Informationen, die durch die Handbewegung eines Menschen aufgezeichnet, wiedererkannt und dargestellt werden können. Hierzu ist eine Schreiboberfläche zur Darstellung der Symbole erforderlich, wobei mit Mitteln die Bewegung der menschlichen Hand bei der Umwandlung der Symbole erfaßt werden. Mit einem solchen Apparat können große Informationsmengen, und insbesondere produktspezifische Informationsmengen nicht zuverlässig übermittelt werden.

Der Erfindung liegt die Aufgabe zugrunde, eine Vorrichtung der eingangs genannten Art dahingehend auszubilden, daß mit geringem Herstellungs- sowie Bedienungsaufwand auch große Informationsmengen einem Benutzer zuverlässig übermittelt werden können. Beim Einsatz in Warenhäusern oder dergleichen sollen produktspezifische Informationsmengen, wie Angaben über Beschaffenheit, Einsatzmöglichkeit, Werkstoff, Verarbeitungsanleitungen, Erläuterungen zum Zubehör usw., dem Kunden dargebo-

Patentanwalt Dipl.-Phys. HANS KLOSE
Zugelassener Vertreter vor dem Europäischen Patentamt     _ 4 _     5700 Ludwigshafen
Kurfürstenstraße 32

0167072

ten werden können. Es sollen hierbei die den Waren bisher nur zur Preisabrechnung oder zur Bestandsaufnahme zugeordneten Codierungen zum Zwecke einer direkten Informationsübermittlung genutzt werden. Auch beim Einsatz der Vorrichtung auf Ausstellungen oder in Museen usw. sollen den Benutzern bei einfacher Handhabung die gewünschten Informationsmengen zuverlässig übermittelt werden können. Eine einfache Handhabung soll gewährleistet sein, damit auch ein ungeübter Benutzer die gewünschten Informationsmengen abrufen kann. Die Vorrichtung soll einen kostengünstigen Aufbau aufweisen und den jeweiligen Einsatzbedingungen mit einem geringen Aufwand anpaßbar sein. Die Vorrichtung soll nach dem Baukastenprinzip aufgebaut werden können, wobei auch handelsübliche Komponenten, beispielsweise Monitoren, Lautsprecher, Bildplattengeräte oder ähnliches, im Hinblick auf geringe Herstellungskosten eingesetzt werden sollen. Darüberhinaus sollen den bereits abgespeicherten Informationsmengen problemlos auch andere Waren oder dergleichen zugeordnet werden können. Die Handhabung und Zuordnung einer neuen Codierung zu einer bereits abgespeicherten Informationsmenge soll mit einem geringen Arbeits- und Geräteaufwand durchführbar sein und die Vorrichtung soll insgesamt eine flexible Handhabung ermöglichen.

Zur Lösung dieser Aufgabe wird vorgeschlagen, daß die Datenverarbeitungseinheit eine programmierbare Codiereinheit aufweist, daß mittels der Codiereinheit einerseits Adressignale für die Informationsmengen der Speichereinheit und andererseits jeweils die zugeordneten Codierungen einer oder mehrerer Waren oder dergleichen gespeichert sind und daß mittels des Lesegerätes über die Codiereinheit aus der Speichereinheit die Informationsmengen abrufbar und auf dem Ausgabegerät darstellbar sind.

Die vorgeschlagene Vorrichtung ist ein autonomes System und ermöglicht eine besonders zuverlässige und den jeweiligen Anforderungen in einfacher Weise anpaßbare Übermittlung von produktspezifischen Informationen an die interessierte Person. Die dem Produkt zugeordnete Codierung, die bisher ausschließlich zur Preisauszeichnung sowie zur Überwachung des Waren-

**Patentanwalt Dipl.-Phys. HANS KLOSE**
Zugelassener Vertreter vor dem Europäischen Patentamt

— 5 —

6700 Ludwigshafen
Kurfürstenstraße 32

**0167072**

flusses diente, wird nunmehr in überraschend einfacher Weise zur Lieferung von Informationen an den Kunden benutzt. Die Codierung ist besonders als ein Strich- oder Barcode aufgebaut, doch können im Rahmen dieser Erfindung entsprechend codierte Magnetbänder oder magnetische Schichten oder ähnliches vorgesehen werden. Strichcodierungen, bei welchen die Breite und Anordnung der Striche sowie der Zwischenräume den jeweiligen Informationswert bestimmen, können mit einem optischen Lesegerät leicht und zuverlässig gelesen werden. Derartige Lesegeräte, die auch als Scanner-Pistolen bezeichnet werden, haben ein geringes Baugewicht und Volumen und können vom Kunden in einfacher Weise in die Hand genommen werden. Zwischen Lesegerät und Datenverarbeitungseinheit ist erfindungsgemäß ein drahtloses Übertragungssystem vorgesehen, wodurch aufwendige Verdrahtungen und Leitungen entfallen. Alternativ kann die Übertragung aber auch auf elektrischem Wege über Leitungen oder auch auf optischem Wege über Glasfasern im Rahmen der Erfindung erfolgen; das Lesegerät ist dann zweckmäßig über eine flexible Leitung, wie beispielsweise bei Telefonapparaten üblich, an die Datenverarbeitungseinheit angeschlossen. Die Datenverarbeitungseinheit enthält geeignete Umsetzer oder Codiereinheiten, damit entsprechend den mit dem Lesegerät erfaßten Informationen die Speichereinheit angesteuert werden kann. Die Codiereinheit ist im Rahmen der Erfindung frei programmierbar und enthält einen Speicher, in welchem einerseits die Adressignale und andererseits die Codierungen einander zugeordnet werden. Ein solcher frei programmierbarer Speicher bzw. Umsetzer ermöglicht eine unmittelbare und ferner schnelle Zuordnung und ggfs. auch Änderung der genannten Signale. In der Speichereinheit sind die produktspezifischen Informationsmengen eingegeben, die erfindungsgemäß Angaben über Beschaffenheit, Einsatzmöglichkeit, Werkstoff usw. beinhalten. Die Informationsmengen können ferner auch Verarbeitungsanleitungen, Erläuterungen zu Zubehör sowie Angaben über den Ort und das Auffinden von weiteren vergleichbaren Produkten im Warenhaus enthalten. Das vorgeschlagene Produktinformations- und Display-System weist erfindungsgemäß eine hohe Informationsdichte auf, die im Rahmen der Erfindung den jeweiligen Erfordernissen in besonders einfacher Weise anpaßbar

**Patentanwalt Dipl.-Phys. HANS KLOSE**
Zugelassener Vertreter vor dem Europäischen Patentamt

6700 Ludwigshafen
Kurfürstenstraße 32

- 6 -

0167072

ist. Die Speichereinheit wird zweckmäßig als ein Videorekorder, Diaprojektor, Magnetplatten oder Bildplattenspeicher oder dergl. für Bildinformationen ausgebildet. Jeder Informationsmenge ist ein definiertes Adressignal zugeordnet, das in Abhängigkeit der vom Lesegerät erfaßten Codierung abgefragt und aufgerufen werden kann, wodurch ein besonders schneller Zugriff zu der gewünschten Informationsmenge sichergestellt ist. Das Ausgabegerät ist auf die in der Speichereinheit enthaltene Informationsart abgestimmt und ist bevorzugt als ein Monitor und/oder Drucker und/oder Lautsprecher oder dergl. ausgebildet.

In einer besonderen Ausführungsform ist das Lesegerät in einem kompakten Handgerät integriert, das einen Sender zur drahtlosen Übertragung der erfaßten Codierung zu einem Empfänger der Datenverarbeitungseinheit aufweist. Die Übertragung kann mittels Radiowellen, insbesondere im UKW-Bereich, oder mit Ultraschall oder mit Infrarot erfolgen. In allen Fällen wird durch die drahtlose Übermittlung die Handhabbarkeit nicht unwesentlich erleichtert, da zum einen eine aufwendige Verkabelung entfällt und zum anderen der Kunde in seiner Bewegungsfreiheit praktisch nicht eingeschränkt ist.

Um einen besonders einfachen Aufbau zu erhalten wird vorgeschlagen, daß das Lesegerät fest angeordnet und insbesondere in die Trägeranordnung integriert ist. Die Produkte werden bei dieser Ausführungsform mit ihrer Strichcodierung an dem festinstallierten Lesegerät vorbeigeführt. Es sei an dieser Stelle ausdrücklich festgehalten, daß im Rahmen dieser Erfindung das Produktinformations- und Display-System als eine komplette Einheit, bestehend aus Trägeranordnung für die Produkte, Lesegerät, Datenverarbeitungseinrichtung sowie Ausgabeeinheit, besteht. Das System ist sozusagen komplett vorbereitet und ist sozusagen steckerfertig lediglich über ein elektrisches Kabel mit einem Netzanschluß zu verbinden. Dies gilt für alle Ausführungsformen, und zwar unabhängig von dem Übertragungssystem zwischen Lesegerät und der Datenverarbeitungseinheit. Das erfindungsgemäße System kann daher ohne besondere Vorkenntnisse an einem gewünschten Ort in einem Warenhaus oder dergl.

Patentanwalt Dipl.-Phys. HANS KLOSE    6700 Ludwigshafen
Zugelassener Vertreter vor dem Europäischen Patentamt    Kurfürstenstraße 32

– 7 –

**0167072**

installiert werden. Aufwendige Montagearbeiten entfallen.

In einer weiteren wesentlichen Ausführungsform sind das Lesegerät und die Ausgabeeinheit in ein kompaktes Handgerät integriert. Die erfindungsgemäß abgerufene Informationsmenge kann also direkt dem Kunden dargeboten werden, wobei zweckmäßig auch eine bestimmte Anzahl derartiger Handgeräte vorgesehen ist. Mehrere Kunden können gleichzeitig und ohne daß sie sich gegenseitig stören, die gewünschten Informationsmengen abrufen. Es bedarf keiner besonderen Hervorhebung, daß auf den heute bekannten kleinen Bildschirmen mit nur wenigen Zentimetern in der Diagonale ohne Schwierigkeiten mit hinreichender Genauigkeit ein Bild dargeboten werden kann; für eine optische Ausgabe kann ein kleiner Lautsprecher in das Handgerät integriert sein. Ebenfalls kann auch in einer besonderen Ausführungsform die Datenverarbeitungseinheit einschließlich Speichereinheit in das Handgerät integriert sein; moderne Technologien zur Datenverarbeitung und Speicherung erlauben eine extrem hohe Informationsdichte bei kleinem Gewicht und Volumen. Sofern die Datenverarbeitungseinheit und auch die Speichereinheit örtlich getrennt von dem Handgerät angeordnet sind, erfolgt die Übermittlung der in der Speichereinheit enthaltenen Informationsmengen ebenfalls mit dem oben bereits erwähnten drahtlosen Übertragungssystem. Bei allen Ausführungsformen ist ein weitgehend autonomes und vom Kunden in einfacher Weise zu betätigendes Handgerät vorhanden, das ein geringes Gewicht und ein geringes Volumen erfindungsgemäß aufweist.

Um einen geringen Aufwand bei der Kennzeichnung der Produkte zu erhalten, wird in einer besonderen Ausführungsform die gleiche Codierung zum Abrufen der oben erläuterten Informationsmengen sowie der für die Preisauszeichnung erforderlichen Informationen genutzt. Mit anderen Worten, die vorhandenen Codierungen werden erfindungsgemäß ausgenutzt, wodurch erhebliche Kosteneinsparungen erreicht werden. Die Datenverarbeitungseinheit enthält die Codiereinheit mit geeigneten Umsetzern, die dem jeweiligen Produkt zugeordnete Informationen als Adressen zum Steuern der Speichereinheit umsetzen. Besonders

**Patentanwalt Dipl.-Phys. HANS KLOSE**
Zugelassener Vertreter vor dem Europäischen Patentamt

6700 Ludwigshafen
Kurfürstenstraße 32

– 8 –

**0167072**

wichtig ist in diesem Zusammenhang, daß mit dem Umsetzer auch eine Anzahl von unterschiedlichen Codierungen von ähnlichen Produkten erfaßt werden, um ein Adressignal zum Abrufen der Informationsmenge der entsprechenden Produktgruppe zu erzeugen. Erfindungsgemäß ist der Umsetzer frei programmierbar, so daß bei Aufnahme eines neuen Produktes oder einer Änderung einer Artikelnummer eine einfache und zuverlässige Zuordnung des erforderlichen Adresssignals vorgenommen werden kann. Die Speichereinheit, insbesondere ein Laservideo für eine Bildplatte, braucht also bei einer Änderung eines Produktes oder mehreren Produkten nicht geändert werden; die gleiche Bildplatte kann ohne weiteres weiter verwendet werden.

Um eine besonders einfache und zuverlässige Eingabe und Zuordnung von Codierungen zu den Adressignalen zu erhalten, ist ein Steuergerät vorgesehen, mittels welchem die von einem Lesegerät erfaßte Codierung einem Adressignal in der Codiereinheit zugeordnet wird. Das Steuergerät kann hierzu beispielsweise Tasten oder ähnliches aufweisen, um das Adressignal einzugeben; nach der Eingabe wird dann die Verknüpfung und Zuordnung zur mit dem Lesegerät erfaßten Codierung vorgenommen. In einer alternativen und wichtigen Ausgestaltung wird mit dem Steuergerät die Speichereinheit derart angesteuert, bis die gewünschte Informationsmenge auf dem Ausgabegerät dargestellt wird. Nunmehr wird erfindungsgemäß mit dem Steuergerät das der Informationsmenge entsprechende Adressignal festgestellt und in der Codiereinheit der erfaßten Codierung zugeordnet. Fehleingaben sind praktisch ausgeschlossen. Wichtig ist im Rahmen der Erfindung, daß einem Adressignal auch eine Anzahl von unterschiedlichen Codierungen zugeordnet werden können, und zwar aufgrund der freien Programmierbarkeit der Codiereinheit ohne weiteres auch nachträglich.

In einer weiteren Ausgestaltung weist die Codiereinheit einen austauschbaren Speicher auf. Dieser Speicher kann extern, beispielsweise in der Zentrale einer Warenhauskette, in der jeweils gewünschten Weise programmiert werden, wenn beispielsweise neue Produktgruppen in das Verkaufsprogramm aufgenommen worden sind. Diese austauschbaren Speicher können dann vor Ort

**0167072**

in den Filialen problemlos in die erfindungsgemäßen Codiereinheiten eingesetzt bzw. gegen die dort vorhandenen ausgetauscht
werden. Besonders günstig sind insoweit Magnet-Disketten für
Floppy-Laufwerke.

In einer anderen wichtigen Ausführungsform sind Steuermittel
vorgesehen, mittels welchen ein Benutzer aus der Speichereinheit weitere Informationsmengen abrufen kann. Ist die zunächst
mit dem Lesegerät abgefragte Informationsmenge für einen Benutzer wenig bedeutsam, so kann er über die Steuermittel unmittelbar Eingriff nehmen und eine andere Informationsmenge
ansteuern. Wird beispielsweise zunächst ein allgemeiner Werbespot dargeboten, so kann durch Betätigen der Steuermittel
dieser übersprungen werden und ein weiterer ganz spezieller
Werbespot dem Benutzer dargeboten werden. Es sei festgehalten,
daß erfindungsgemäß die Informationsmengen in der Speichereinheit bzw. die entsprechenden Adressignale eine definierte
hierarchische Zuordnung zueinander aufweisen. So sind in der
Codiereinheit erfindungsgemäß die Befehle bzw. Adressen- und /
oder Funktionssignale hintereinander aufgelistet und nacheinander abfragbar, wobei über Verzweigungen, Zeiger oder Sprungbefehle auch auf übergeordnete oder nachfolgende Speicherplätze gefahren werden kann.

In einer besonderen Weiterbildung sind in dem Codierspeicher
die Adressignale der Informationsmengen derart gespeichert,
daß ein Benutzer die nächstfolgende oder die zuvor bereits
dargebotene Informationsmenge aufrufen kann. So kann ein Benutzer, falls die Informationsmengen in Form von Bildern gespeichert sind, problemlos zuvor bereits gesehene Bilder noch
einmal aufrufen, um beispielsweise zusätzlich zu den bisher
erhaltenen Informationen über ein bestimmtes Produkt parallele
Informationen zu erhalten. Mittels einer zentralen Recheneinheit, die bevorzugt als Mikroprozessor ausgebildet ist, werden
die in der Codiereinheit erfindungsgemäß aufgelisteten Adressen oder Funktionssignale nacheinander abgefragt. Ferner erhält diese erfindungsgemäße Auflistung auch sogenannte Zeiger,
um bei Bedarf nachfolgende Speicherplätze zu überspringen oder
auch zurückzufahren. Über die Steuermittel kann ein Benutzer

**Patentanwalt Dipl.-Phys. HANS KLOSE**
Zugelassener Vertreter vor dem Europäischen Patentamt

**6700 Ludwigshafen**
Kurfürstenstraße 32

- 10 -

0167072

das nächste Bild oder die nächste Bildsequenz aus der Speichereinheit unmittelbar abrufen. Das Interesse eines Benutzers bleibt somit ununterbrochen aufrecht erhalten, und er ermüdet nicht durch eine allzu lange oder von ihm nicht erwünschte Darstellung.

Nach einer besonderen Weiterbildung ist ein Zwischenspeicher vorgesehen, aus welchem Ton- oder Textinformationen abrufbar und insbesondere über eine Mischstufe dem Ausgabegerät zuführbar sind, wobei der Zwischenspeicher mittels der genannten Adress- oder Funktionssignale ansteuerbar ist. Auf diese überraschend einfache Weise können ggfs. auch noch nachträglich zusätzliche Informationen eingeblendet werden. Hierzu muß keine neue Bildplatte oder ein ähnliches Speichermedium angefertigt werden. Aufgrund dieser wesentlichen Ausgestaltung ist die Möglichkeit geschaffen, ein Standbild mit Ton- oder Textsignalen zu unterlegen. Zweckmäßig werden derartige Tonsignale ebenfalls auf dem Speichermedium, insbesondere der Bildplatte, abgespeichert. Hierzu dienen im Rahmen dieser Erfindung bei Speicherung von Bildern nach den Fernsehnormen die freien Zeilen zwischen den aufeinanderfolgenden Bildern bzw. Halbbildern. Wird nach dem Start der Vorrichtung zunächst eine Bildsequenz abgespielt, so können gleichzeitig Tonsignale in den Zwischenspeicher überspielt werden. Wird nachfolgend ein Standbild auf dem Monitor oder einem Fernsehgerät zur Anzeige gebracht, so wird erfindungsgemäß das gespeicherte Tonsignal aus dem Zwischenspeicher abgerufen. Die nach den bekannten Fernsehnormen von Bildsignalen freien Zeilen werden erfindungsgemäß für Tonsignale genutzt, die nach der Zwischenspeicherung gleichzeitig mit dem zugeordneten Standbild wieder abgefragt und ausgegeben werden. Darüberhinaus liegt im Rahmen der Erfindung auch ein derartiger Zwischenspeicher, in welchem Tonsignale, beispielsweise in Form von Unterhaltungsmusik, gespeichert sind; hierzu kann ein Kassettenrekorder üblicher Bauweise zum Einsatz gelangen. Die akustische Ausgabe in Verbindung mit der Bildausgabe hat den Vorteil einer besonders unmittelbaren Ansprache und Beeinflussung eines Benutzers.

**0167072**

In einer wesentlichen Weiterbildung ist der Speichereinheit eine standardisierte Schnittstelle, insbesondere eine V-24-Schnittstelle vorgeschaltet. Die Speichereinheit und das Ausgabegerät können aus handelsüblichen Komponenten, nämlich insbesondere Laser-Bildplatten-Gerät oder Videorekorder sowie Fernsehgerät bzw. Monitor ausgebildet sind, wodurch nicht unwesentliche Kostenvorteile für die gesamte Vorrichtung erzielt werden.

Die Erfindung wird nachfolgend an Hand der in der Zeichnung dargestellten Ausführungsbeispiele näher erläutert. Es zeigen:

Fig. 1    eine prinzipielle Darstellung der Vorrichtung als Blockschaltbild,

Fig. 2    eine weitere Ausführungsform, bei welcher eine weitere Speichereinheit für Tonsignale vorhanden ist.

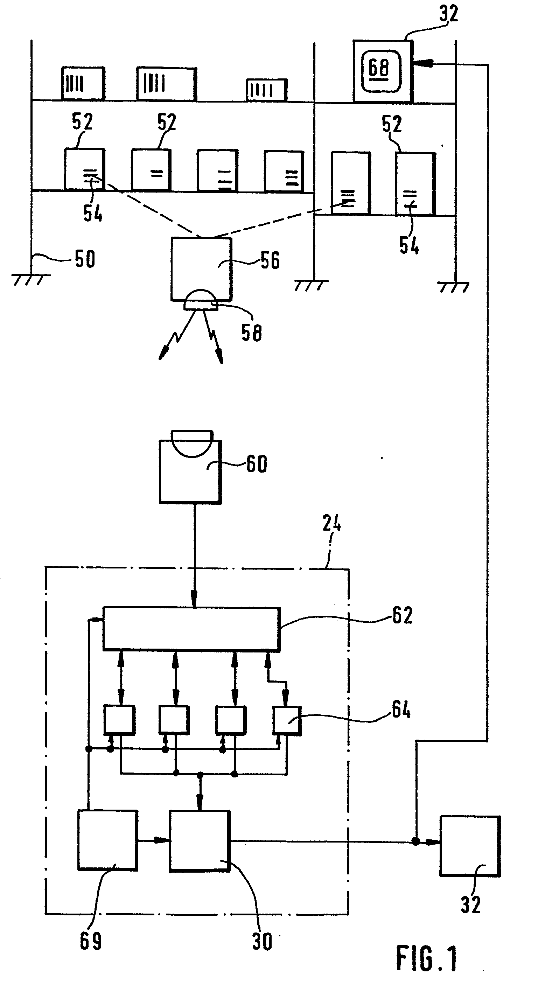

In Fig. 1 ist eine Ausführungsform der Vorrichtung als Blockschaltbild dargestellt, wobei in einer Trägeranordnung 50 mehrere Produkte 52 zu erkennen sind. Jedes Produkt ist mit einer Codierung 54 nach Art eines Barcodes versehen, der aus mehreren Strichen unterschiedlicher Breite, Abstand usw. besteht. Die Codierung entspricht insbesondere der Artikelnummer und Angaben zum Gewicht, Menge usw. Für unterschiedliche Produkte sind dementsprechend auch die Codierungen verschieden. Mit einem optischen Lesegerät 56, das in gewohnter Weise bei Bedarf an der Codierung 54 des betreffenden Produktes 52 vorbeizuführen ist, ist die Codierung 54 zu erfassen und in entsprechende elektrische Signale umzuwandeln. Das Lesegerät 56 ist erfindungsgemäß als eine Scanner-Pistole aufgebaut und kann als kompaktes, leichtes Handgerät ohne weiteres von einem Kunden bzw. Benutzer in die Hand genommen und über die Codierung 54 des interessierenden Produktes 52 geführt werden. Die Scanner-Pistole bzw. das kompakte Lesegerät 56 enthält eine geeignete Elektronik einschließlich Batterien, Stromversorgung usw., um eine zuverlässige Umwandlung in elektrische Signale

**Patentanwalt Dipl.-Phys. HANS KLOSE**
Zugelassener Vertreter vor dem Europäischen Patentamt

**6700 Ludwigshafen**
Kurfürstenstraße 32

- 12 -

**0167072**

zu erhalten. Zur Übertragung der mit dem Lesegerät 56 erhaltenen Signale zur Datenverarbeitungseinheit 24 ist ein drahtloses Übertragungssystem mit einem Sender 58 und einem Empfänger 60 vorgesehen. Der Sender 58 ist in das Lesegerät 56 intergriert, das erfindungsgemäß als eine Scanner-Pistole ausgebildet ist und ein geringes Gewicht und ein geringes Volumen aufweist. Der Datenverarbeitungseinheit 24 ist der Empfänger 60 vorgeschaltet und liefert die Signale an einen Vergleicher 62. Der Vergleicher 62 steht mit einer Codiereinheit 64 mit Umsetzern 64 in Verbindung, die zur Ausgabe von Adressignalen an das nachgeschaltete Ausgabegerät 32 vorgesehen sind. Die Umsetzer sind frei programmierbar ausgebildet, um eine eindeutige Zuordnung von Adressignal und der dem jeweiligen Produkt 52 zugeordneten Codierung zu erhalten. Erfindungsgemäß können auch mehrere Codierungen, beispielsweise einer bestimmten Produktgruppe über den Umsetzer 64 zusammengefaßt werden, um ein einziges Adressignal für die Speichereinheit 30 zu erhalten. Die Speichereinheit 30 enthält in einer bevorzugten Ausführungsform eine Bildplatte oder eine Laserdisc. Auf der Bildplatte sind den Produkten oder Produktegruppen zugeordnete Informationsmengen bzw. Werbespots, Kundeninformationen, Einsatzmöglichkeiten, Hinweise auf weitere zugehörende Produkte und ähnliches enthalten. Diese Informationsmengen werden bei Abfrage mit dem Lesegerät 56 an das Ausgabegerät 32 gegeben und dem Kunden visuell und / oder akustisch dargeboten.

Das erfindungsgeäß vorgeschlagene drahtlose Übertragungssystem arbeitet insbesondere mit Radiowellen, z. B. im UKW-Bereich, oder mit Ultraschall oder mit Infrarot. Derartige Übertragungssysteme zeichnen sich durch eine hohe Funktionssicherheit aus und erfordern bei Einsatz der modernen Mikroelektronik einen äußerst geringen Platz- und Gewichtsbedarf. Dies ist insbesondere im Hinblick auf das als eine Scanner-Pistole ausgebildete Lesegerät von Bedeutung.

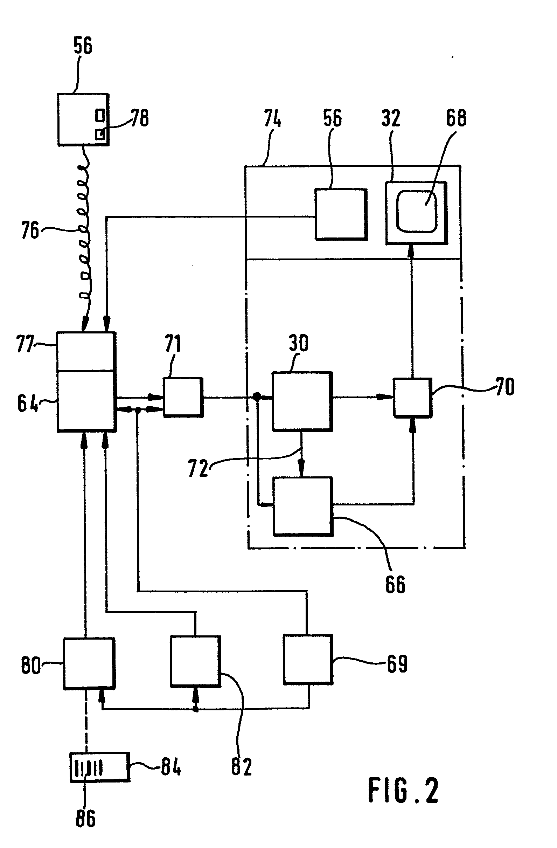

Fig. 2 zeigt eine weitere Ausführungsform, bei welcher der Speichereinheit 30 eine weitere Speichereinheit 66 zugeordnet ist. Ist das Ausgabegerät 32 im Rahmen der Erfindung als ein Fernsehgerät oder Monitor mit einem Bildschirm 68 ausgebildet,

**Patentanwalt Dipl.-Phys. HANS KLOSE**
Zugelassener Vertreter vor dem Europäischen Patentamt

6700 Ludwigshafen
Kurfürstenstraße 32

- 13 -

0167072

so werden mittels des weiteren Speichers 66 zusätzliche Text- oder Tonsignale abgespeichert. Der weitere Speicher kann als ein Kassettenrekorder üblicher Bauweise ausgebildet sein. In diesen Speicher können problemlos auch Texteinblendungen, insbesondere über neue Produkte, geänderte Leistungsdaten usw., zusätzlich eingegeben werden, wodurch sich eine hohe Flexibilität und Anpaßbarkeit der Vorrichtung an die sich ändernden Randbedingungen ergibt. Die Signale dieser weiteren Speichereinheit 66 werden einer Mischstufe 70 zugeführt, um über das Ausgabegerät 32 bzw. den Monitor entweder gemischt oder auch zeitlich versetzt zu den Bildinformationsmengen der Speichereinheit 30 ausgegeben zu werden. Im Rahmen der Erfindung ist der Speichereinheit 30 und auch der weiteren Speichereinheit 66 eine standardisierte Schnittstelle 71, bevorzugt eine V-24 Schnittstelle, vorgeschaltet. Für die genannten Speichereinheiten können somit handelsübliche Geräte vorgesehen werden, wodurch Investitionskosten niedrig gehalten werden können. Über eine zentrale Recheneinheit 69, innsbesondere einen Mikroprozessor, erfolgt die Steuerung und die Überwachung der verschiedenen Einheiten.

Der weitere Speicher 66 dient im Rahmen der Erfindung auch als Zwischenspeicher für insbesondere auf einer Laser-Bildplatte der Speichereinheit 4 abgespeicherte Tonsignale. Bekanntlich können gemäß den Fernsehnormen parallel zu den Bildsignalen ggfs. auch auf zwei Tonspuren für Stereo-Tonwiedergabe Tonsignale aufgezeichnet sein. Wird für die Bildsequenzen nur eine Tonspur (Monowiedergabe) genutzt, so können im Rahmen dieser Erfindung auf der zweiten Tonspur Tonsignale für Standbilder abgespeichert werden. Wie durch die Verbindung 72 angedeutet, werden beim Abspielen einer Bildsequenz die letztgenannten Tonsignale in den weiteren Speicher 66, der nunmehr als Zwischenspeicher fungiert, gegeben. Wird dann ein Standbild aus der Speichereinheit 30 abgerufen, so wird gleichzeitig auf den weiteren Speicher 66 ein Signal gegeben, um die dem Standbild zugeordneten Tonsignale abzurufen. In einer alternativen und sehr wesentlichen Ausführung werden die genannten Tonsignale auf Zeilen zwischen den einzelnen Bildern bzw. Halbbildern abgespeichert. Die Signaldichte von derartigen Zwischenzeilen

**Patentanwalt Dipl.-Phys. HANS KLOSE**
Zugelassener Vertreter vor dem Europäischen Patentamt

6700 Ludwigshafen
Kurfürstenstraße 32

- 14 -

**0167072**

ist erheblich größer als auf den oben genannten parallelen Tonspuren, wobei auch ohne weiteres die Stereowiedergabe ermöglicht wird.

Aus Fig. 2 ist ferner ersichtlich, daß das Lesegerät 56 mit dem Ausgabegerät 32 zu einem kompakten Handgerät 74 zusammengefaßt ist. Darüberhinaus kann auch die Speichereinheit 30 zusammen mit der weiteren Speichereinheit 66, wie durch die strichpunktierten Linien angedeutet, zu einer Einheit integriert sein. Moderne elektronische Speicher, genannt seien hier Blasenspeicher, weisen bei äußerst geringem Volumen und Gewicht eine hohe Speicherkapazität auf, so daß auch große Informationsmengen unmittelbar in der Speichereinheit des Handgerätes abgespeichert werden können. Diese Ausführungsform hat den besonderen Vorteil, daß bei Einsatz von mehreren derartigen Lesegeräten auch mehrere Kunden gleichzeitig die gewünschten Informationsmengen abrufen können, ohne daß hierbei eine gegenseitige Beeinflussung erfolgt. Über einen kleinen, in das Handgerät 74 integrierten Bildschirm 68, der in der Diagonale nur wenige Zentimeter aufweist, und / oder Miniaturlautsprecher erfolgt problemlos die Ausgabe der abgerufenen Informationsmengen.

Die Übertragung der Codierungen vom Lesegerät zur Datenverarbeitungseinheit bzw. zur Codiereinheit 64 kann auch über eine Leitung 76 erfolgen. Diese Leitung kann als eine elektrische Leitung oder auch als ein Glasfaserkabel für eine direkte optische Übertragung ausgebildet sein. Bei Übertragung mit einem Glasfaserkabel kann mit einem äußerst geringen Aufwand die mit dem optischen Lesegerät 56 erfaßte Strichcodierung der Produkte unmittelbar der Datenverarbeitungseinheit bzw. der Codiereinheit 64 zugeführt werden. In einem der Codiereinheit 64 vorgeschalteten Wandler 77 erfolgt die Umwandlung in elektrische Signale. Derartige optische Lesegeräte 56 zeichnen sich durch ein besonders geringes Gewicht und eine einfache Handhabung aus.

0167072

Das Lesegerät 56 enthält ferner Steuermittel 78 in Form von zwei Schaltern oder Tastern. Durch Betätigen dieser Steuermittel 78 wird erfindungsgemäß die Speichereinheit 30 unmittelbar weitergeschaltet, so daß auf dem Ausgabegerät 32 bzw. dem Bildschirm 68 eine andere Informationsmenge ausgegeben wird. So kann ein Benutzer in überraschend einfacher Weise über die Steuermittel 78 aktiv die Informationsausgabe beeinflussen und ggfs. auf zuvor bereits dargebotene Informationsmengen noch einmal zurückgreifen oder aber auch für ihn weniger bedeutsame Informationsmengen überspringen.

Eine besonders wesentliche Weiterbildung wird durch das Lesegerät 80 in Verbindung mit dem Steuergerät 82 erreicht. Die Eingabe und ggfs. Änderung von bereits vorhandenen Zuordnungen zwischen Codierung und Adressignal wird sehr einfach. Ist ein neues Produkt 84 aufzunehmen, so wird mit dem Lesegerät 80 die dazugehörende Codierung 86 an die Codiereinheit 64 weitergegeben. Vorausgesetzt die Speichereinheit enthält bereits einen passenden Werbespot oder eine brauchbare Informationsmenge, so wird mit dem Steuergerät 82 die Speichereinheit betätigt. Im Rahmen der Erfindung kann über das Steuergerät unmittelbar, beispielsweise mittels Tasten, das bekannte Adressignal eingegeben werden. Alternativ kann mit dem Steuergerät 82 über die Codiereinheit 64 die Speichereinheit 30 derart angefahren werden, daß nacheinander, ggfs. auch in schneller Folge, die Informationsmengen auf dem Ausgabegerät 32 dargeboten werden. Ist die gewünschte Informationsmenge schließlich dargeboten, so wird mit dem Steuergerät 82 die Abfrage der Codiereinheit gestoppt und erfindungsgemäß die Zuordnung zu der Codierung 86 vorgenommen und abgespeichert. Die erfindungsgemäße Codiereinheit weist für die Adressignale mehrere Speicherplätze auf, die ohne Schwierigkeiten auch nachträglich in der erläuterten Weise belegt werden können. Auch bei Aufnahme neuer Produkte, die mit anderen Produkten der gleichen Art vergleichbar sind, kann also das Speichermedium bzw. die Speichereinheit 30 unverändert beibehalten werden. Hierdurch ergeben sich erhebliche Vorteile beim Einsatz der erfindungsgemäßen Vorrichtung.

**Patentanwalt Dipl.-Phys. HANS KLOSE**
Zugelassener Vertreter vor dem Europäischen Patentamt

6700 Ludwigshafen
Kurfürstenstraße 32

– 16 –

**0167072**

Bezugszeichenliste

| | |
|---|---|
| 24 | Datenverarbeitungseinheit |
| 30 | Speichereinheit |
| 32 | Ausgabegerät |
| 50 | Trägeranordnung |
| 52 | Produkt |
| 54 | Codierung |
| 56 | Lesegerät |
| 58 | Sender |
| 60 | Empfänger |
| 62 | Vergleicher |
| 64 | Codiereinheit |
| 66 | weitere Speichereinheit |
| 68 | Bildschirm |
| 69 | zentrale Recheneinheit, CPU |
| 70 | Mischstufe |
| 71 | Schnittstelle |
| 72 | Verbindung |
| 74 | Handgerät |
| 76 | Leitung |
| 77 | Wandler |
| 78 | Steuermittel |
| 80 | Lesegerät |
| 82 | Steuereinheit |
| 84 | neues Produkt |
| 86 | Codierung |

Patentanwalt Dipl.-Phys. HANS KLOSE    6700 Ludwigshafen
Zugelassener Vertreter vor dem Europäischen Patentamt    Kurfürstenstraße 32
- 17 -

0167072

Patentansprüche

1. Vorrichtung zur Speicherung und Ausgabe von Informationsmengen mit einem Lesegerät für Codierungen, die an Waren oder
sonstigen Objekten angeordnet oder diesen zugeordnet sind, mit
einer Datenverarbeitungseinheit und mit einer Speichereinheit
für Informationsmengen, die entsprechend der jeweils mit dem
Lesegerät eingelesenen Codierung über ein Adressignal abrufbar
und mittels eines Ausgabegerätes darstellbar sind,
dadurch gekennzeichnet, daß die Datenverarbeitungseinheit (24)
eine programmierbare Codiereinheit (64) aufweist,
daß mittels der Codiereinheit (64) einerseits Adressignale für
die Informationsmengen der Speichereinheit (30) und andererseits jeweils die zugeordneten Codierungen (54) einer oder
mehrerer Waren (52) oder dergleichen gespeichert sind,
und daß mittels des Lesegerätes (56) über die Codiereinheit
(64) aus der Speichereinheit (30) die Informationsmengen abrufbar und auf dem Ausgabegerät (32) darstellbar sind.

2. Vorrichtung nach Anspruch 1, dadurch gekennzeichnet, daß
die Codiereinheit (64) als ein frei programmierbarer Speicher
ausgebildet ist.

3. Vorrichtung nach Anspruch 1 oder 2, dadurch gekennzeichnet,
daß die Datenverarbeitungseinheit (24) einen Vergleicher (62)
aufweist, mit welchem die vom Lesegerät (56) erhaltenen Codierungen oder entsprechende Signale mit den in der Codiereinheit
(64) enthaltenen Signalen verglichen und bei Übereinstimmung
weitergegeben werden.

4. Vorrichtung nach einem der Ansprüche 1 bis 3, dadurch gekennzeichnet, daß das Lesegerät (56) als ein kompaktes Handgerät ausgebildet ist, das einen Sender (58) zur drahtlosen

Patentanwalt Dipl.-Phys. HANS KLOSE
Zugelassener Vertreter vor dem Europäischen Patentamt

6700 Ludwigshafen
Kurfürstenstraße 32

– 18 –

0167072

Übertragung der erfaßten Codierung (54) zu einem der Datenverarbeitungseinheit (24) zugeordneten Empfänger (60) aufweist.

5. Vorrichtung nach einem der Ansprüche 1 bis 4, dadurch gekennzeichnet, daß das Lesegerät (56) und das Ausgabegerät (32) in ein kompaktes Handgerät integriert sind.

6. Vorrichtung nach einem der Ansprüche 1 bis 5, dadurch gekennzeichnet, daß die Datenverarbeitungseinheit (24), die Speichereinheit (30) sowie das Lesegerät (56) in ein kompaktes Handgerät integriert sind.

7. Vorrichtung nach einem der Ansprüche 1 bis 6, dadurch gekennzeichnet, daß die Datenverarbeitungseinheit (24) oder die Codiereinheit (64) wenigstens einen frei programmierbaren Umsetzer oder Speicher enthält, mittels welchem die Codierungen (54) eines und / oder mehrerer Produkte (52) erfaßt und in entsprechende Adresssignale für die Speichereinheit (30) umgesetzt werden.

8. Vorrichtung nach einem der Ansprüche 1 bis 7, dadurch gekennzeichnet, daß der Speichereinheit (30) von außen, und insbesondere von einer externen Zentrale aus, zusätzliche und / oder abgeänderte neue Informationsmengen zugeführt werden können.

9. Vorrichtung nach einem der Ansprüche 1 bis 8, dadurch gekennzeichnet, daß die Übermittlung der mit dem Lesegerät (56) erfaßten Codierung (54) unmittelbar auf optischem Wege, insbesondere mit einem Glasfaserkabel, erfolgt.

10. Vorrichtung, insbesondere nach einem der Ansprüche 1 bis 9, dadurch gekennzeichnet, daß wenigstens ein weiterer Speicher (66), insbesondere für Text- und / oder Toninformationen vorgesehen ist, welcher entweder unmittelbar, beispielsweise über einen Lautsprecher, ausgebbar oder über eine Mischstufe (70) dem Ausgabegerät (32) zuführbar ist.

11. Vorrichtung nach Anspruch 10, dadurch gekennzeichnet, daß der Speicher (66) als Zwischenspeicher für in der Speichereinheit (30) gespeicherte Informationen dient, welche beim Abspielen einer Sequenz von aufeinanderfolgenden Bildern gespeichert und bei Ausgabe eines Standbildes ausgegeben werden.

12. Vorrichtung nach Anspruch 11, dadurch gekennzeichnet, daß die in den Zwischenspeicher (66) zu übernehmenden Informationen in einer Tonspur parallel zu den Bildern einer Bildsequenz oder in einzelnen Zeilen zwischen Bildern oder Halbbildern einer Bildsequenz der Speichereinheit (30) gespeichert sind.

13. Vorrichtung, insbesondere nach einem der vorhergehenden Ansprüche, dadurch gekennzeichnet, daß ein Lesegerät (80) und ein Steuergerät (82) mit der Codiereinheit (64) verbunden sind, um die Zuordnung einer Codierung (86) auf einem Produkt (84) zu einem auswählbaren Adressignal vorzunehmen.

14. Vorrichtung nach einem der vorhergehenden Ansprüche, dadurch gekennzeichnet, daß das Lesegerät (56) Steuermittel (78) enthält, um weitere Informationsmengen aus der Speichereinheit (30) abzurufen.

$\frac{1}{2}$

0167072

FIG.1

FIG.2